# EUROPEAN PATENT SPECIFICATION

(11) **EP 2 630 441 B1**
(45) Date of publication and mention of the grant of the patent: **27.11.2019**
(21) Application number: 11834816.8
(22) Date of filing: 23.09.2011
(51) Int. Cl.: G06F 16/958, G06F 17/22, G01C 21/36

(54) **NAVIGATION SYSTEM WITH XPATH REPETITION BASED FIELD ALIGNMENT MECHANISM AND METHOD OF OPERATION THEREOF**
NAVIGATIONSSYSTEM MIT EINEM AUF EINER X-PFAD-WIEDERHOLUNG BASIERENDEN FELDAUSRICHTUNGSMECHANISMUS UND BETRIEBSVERFAHREN DAFÜR
SYSTÈME DE NAVIGATION COMPRENANT UN MÉCANISME D'ALIGNEMENT DE CHAMPS BASÉ SUR UNE RÉPÉTITION D'EXPRESSIONS XPATH ET PROCÉDÉ DE FONCTIONNEMENT DE CE DERNIER

(30) Priority: 21.10.2010 US 909424
(43) Date of publication of application: 28.08.2013
(73) Proprietor: TeleNav, Inc., Sunnyvale, CA 94085 (US)
(72) Inventor: DIAO, Qian, Cupertino California 95014 (US)
(74) Representative: Liesegang, Eva
(86) International application number: PCT/US2011/053084
(87) International publication number: WO 2012/054182

(56) References cited:
- US-A1- 2006 282 758
- US-A1- 2008 208 447
- US-A1- 2008 320 387
- US-A1- 2010 020 091
- YANHONG ZHAI ET AL: "Structured Data Extraction from the Web Based on Partial Tree Alignment", IEEE TRANSACTIONS ON KNOWLEDGE AND DATA ENGINEERING, IEEE SERVICE CENTER, LOS ALAMITOS, CA, US, vol. 18, no. 12, 1 December 2006 (2006-12-01), pages 1614-1628, XP011149672, ISSN: 1041-4347, DOI: 10.1109/TKDE.2006.197

## Description

### TECHNICAL FIELD

The present invention relates generally to a navigation system, and more particularly to a system for extensible markup language (XML) path language (XPath) repetition based field alignment mechanism.

### BACKGROUND ART

Modern portable consumer and industrial electronics, especially client devices such as navigation systems, cellular phones, portable digital assistants, and combination devices, are providing increasing levels of functionality to support modern life including location-based information services. Research and development in the existing technologies can take a myriad of different directions.

As users become more empowered with the growth of mobile location based service devices, new and old paradigms begin to take advantage of this new device space. There are many technological solutions to take advantage of this new device location opportunity. One existing approach is to use location information to provide navigation services such as a global positioning system (GPS) for a car or on a mobile device such as a cell phone, portable navigation device (PND) or a personal digital assistant (PDA).

Location based services allow users to create, transfer, store, and/or consume information in order for users to create, transfer, store, and consume in the "real world". One such use of location based services is to efficiently transfer or route users to the desired destination or service.

Navigation systems and location based services enabled systems have been incorporated in automobiles, notebooks, handheld devices, and other portable products. Today, these systems aid users by incorporating available, real-time relevant information, such as maps, directions, local businesses, or other points of interest (POI). The real-time information provides invaluable relevant information.
US 2008/0208 447 A1 describes a method of operating a navigation system wherein an entry for point of interest is received, and review for the point of interest on an original web page is located. In order to display the review on the navigation system, the display format of the original webpage is recognized and a reformatted webpage is generated for display on the navigation device.

Thus, a need still remains for a navigation system with key XPath repetition based field alignment mechanism to generate a webpage that can extract and align all the fields from a source webpage to a revised version of the webpage. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### DISCLOSURE OF THE INVENTION

The present invention is defined by the features of the independent claims. Further embodiments are the subject-matter of the dependent claims.

The present invention provides a method of operation of a navigation system according to claim 1 and a system of operation of a navigation system according to claim 6. Embodiments of the invention are defined in the dependent claims.

The present invention provides a method of operation of a navigation system including: receiving an entry for a point of interest; locating a review on an original webpage for the point of interest; generating an identical segmentation shared by a field in the review from a display format of the original webpage; selecting the field based on identifying the identical segmentation shared for grouping the field; generating a revised webpage based on aligning the field; and generating a travel route based on selecting the point of interest for displaying on a device.

The present invention provides a navigation system, including: an input module for receiving an entry for a point of interest; a review locator module, coupled to the input module, for locating a review on an original webpage for the point of interest; a key generator module, coupled to the review locator module, for generating an identical segmentation shared by a field in the review from a display format of the original webpage; a review generator module, coupled to the key generator module, for selecting the field based on identifying the identical segmentation shared for grouping the field; a webpage generator module, coupled to the review generator module, for generating a revised webpage based on aligning the field; and a route generator module, coupled to the webpage generator module, for generating a travel route based on selecting the point of interest for displaying on a device.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a navigation system with XPath repetition based field alignment mechanism in an example of the present invention.
FIG. 2 is an example of an original webpage for point of interest.
FIG. 3 is an example of a display format of the review for the point of interest.
FIG. 4 is an example of an extracted webpage failing to include some of the fields for the review from the original webpage.
FIG. 5 is an example of the first device extracting all of the fields for the review from the original webpage to generate a revised webpage for the point of interest.
FIG. 6 is a display example of a display interface for the first device.
FIG. 7 is an exemplary block diagram of the navigation system.
FIG. 8 is a control flow of the navigation system.
FIG. 9 is a flow chart of a method of operation of the navigation system in a further embodiment of the present invention.

### BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes may be made without departing from the scope of the present invention.

In the following description, numerous specific details are given to provide a thorough understanding of the invention. However, it will be apparent that the invention may be practiced without these specific details. In order to avoid obscuring the present invention, some well-known circuits, system configurations, and process steps are not disclosed in detail.

The drawings showing examples of the present invention of the system are semi-diagrammatic and not to scale and, particularly, some of the dimensions are for the clarity of presentation and are shown exaggerated in the drawing FIGs. Similarly, although the views in the drawings for ease of description generally show similar orientations, this depiction in the FIGs. is arbitrary for the most part. Generally, the invention can be operated in any orientation. The embodiments have been numbered first embodiment, second embodiment, etc. as a matter of descriptive convenience and are not intended to have any other significance or provide limitations for the present invention.

One skilled in the art would appreciate that the format with which navigation information is expressed is not critical to some embodiments of the invention. For example, in some examples of the present invention, navigation information is presented in the format of (X, Y), where X and Y are two ordinates that define the geographic location, i.e., a position of a user.

In an alternative example of the present invention, navigation information is presented by longitude and latitude related information. In a further example of the present invention, the navigation information also includes a velocity element including a speed component and a heading component.

The term "relevant information" referred to herein comprises the navigation information described as well as information relating to points of interest to the user, such as local business, hours of businesses, types of businesses, advertised specials, traffic information, maps, local events, and nearby community or personal information.

The term "module" referred to herein can include software, hardware, or a combination thereof. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof.

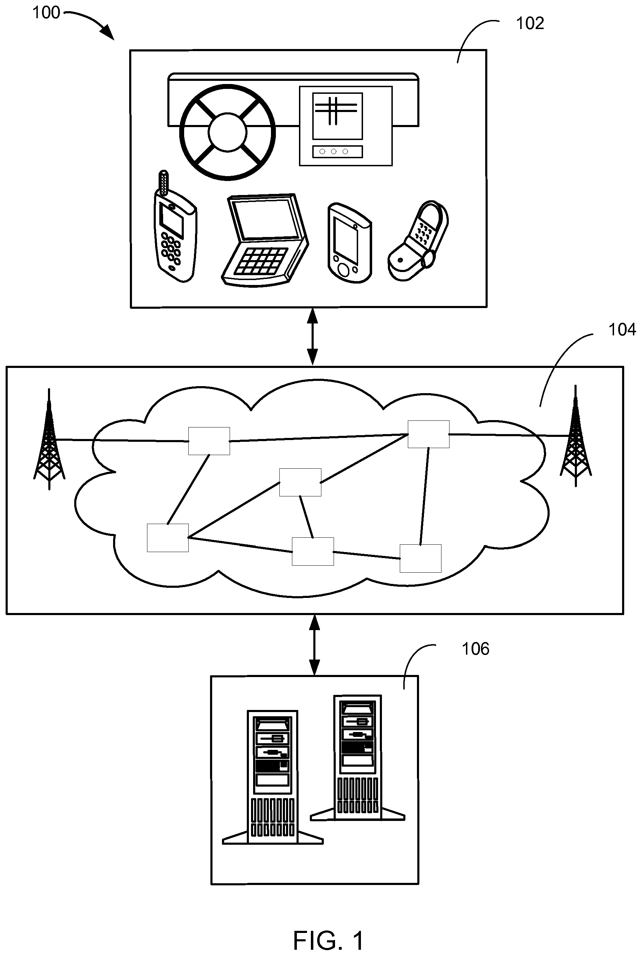

Referring now to FIG. 1, therein is shown a navigation system 100 with XPath repetition based field alignment mechanism in an example of the present invention. The navigation system 100 includes a first device 102, such as a client or a server, connected to a second device 106, such as a client or server, with a communication path 104, such as a wireless or wired network.

For example, the first device 102 can be of any of a variety of mobile devices, such as a cellular phone, personal digital assistant, a notebook computer, automotive telematic navigation system, or other multi-functional mobile communication or entertainment device. The first device 102 can be a standalone device, or can be incorporated with a vehicle, for example a car, truck, bus, or train. The first device 102 can couple to the communication path 104 to communicate with the second device 106.

For illustrative purposes, the navigation system 100 is described with the first device 102 as a mobile computing device, although it is understood that the first device 102 can be different types of computing devices. For example, the first device 102 can also be a non-mobile computing device, such as a server, a server farm, or a desktop computer.

The second device 106 can be any of a variety of centralized or decentralized computing devices. For example, the second device 106 can be a computer, grid computing resources, a virtualized computer resource, cloud computing resource, routers, switches, peer-to-peer distributed computing devices, or a combination thereof.

The second device 106 can be centralized in a single computer room, distributed across different rooms, distributed across different geographical locations, embedded within a telecommunications network. The second device 106 can have a means for coupling with the communication path 104 to communicate with the first device 102. The second device 106 can also be a client type device as described for the first device 102.

In another example, the first device 102 can be a particularized machine, such as a mainframe, a server, a cluster server, rack mounted server, or a blade server, or as more specific examples, an IBM System z10 (TM) Business Class mainframe or a HP ProLiant ML (TM) server. Yet another example, the second device 106 can be a particularized machine, such as a portable computing device, a thin client, a notebook, a netbook, a smartphone, personal digital assistant, or a cellular phone, and as specific examples, an Apple iPhone (TM), Palm Centro (TM), or Moto Q Global (TM).

For illustrative purposes, the navigation system 100 is described with the second device 106 as a non-mobile computing device, although it is understood that the second device 106 can be different types of computing devices. For example, the second device 106 can also be a mobile computing device, such as notebook computer, another client device, or a different type of client device. The second device 106 can be a standalone device, or can be incorporated with a vehicle, for example a car, truck, bus, or train.

Also for illustrative purposes, the navigation system 100 is shown with the second device 106 and the first device 102 as end points of the communication path 104, although it is understood that the navigation system 100 can have a different partition between the first device 102, the second device 106, and the communication path 104. For example, the first device 102, the second device 106, or a combination thereof can also function as part of the communication path 104.

The communication path 104 can be a variety of networks. For example, the communication path 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104.

Further, the communication path 104 can traverse a number of network topologies and distances. For example, the communication path 104 can include direct connection, personal area network (PAN), local area network (LAN), metropolitan area network (MAN), wide area network (WAN) or any combination thereof.

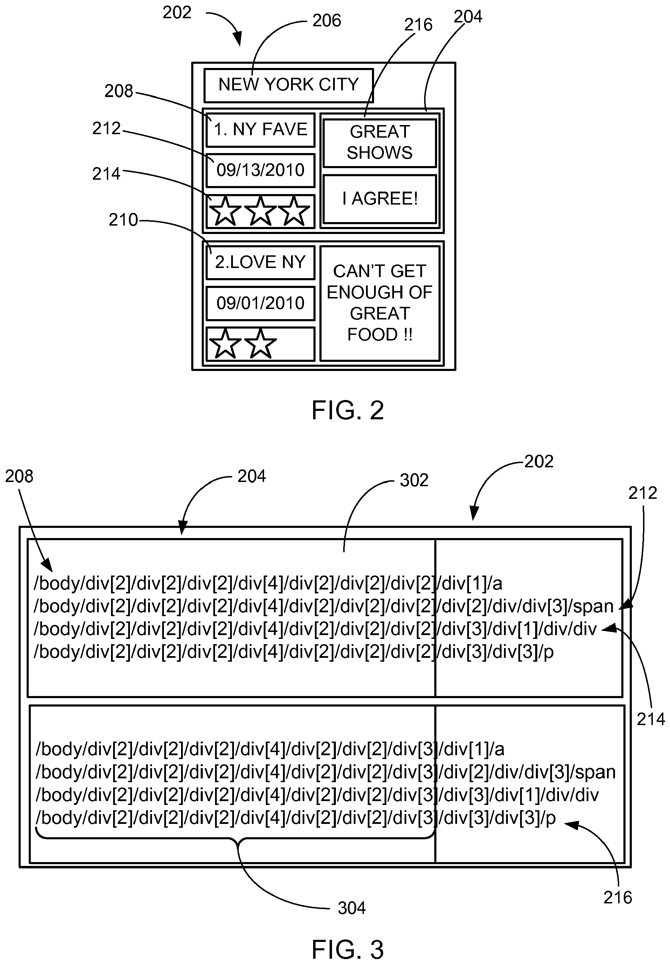

Referring now to FIG. 2, therein is shown an example of an original webpage 202 for point of interest 206. The original webpage 202 is defined a webpage accessed by the navigation system 100 for a review 204 of a point of interest 206. The point of interest 206 is defined as the physical location where the user of the navigation system 100 is interested to reach at the end of the travel. The review 204 is defined as a critique, a comment, or a combination thereof regarding the point of interest 206.

For example, the point of interest 206 can be New York City. The review 204 can represent a critique, a comment, or a combination thereof of New York City made by travelers who had visited New York City. The original webpage 202 can represent a travel webpage, such as www.tripadvisor.com (TM). The original webpage 202 can include the review 204 of New York City by travelers who had traveled to New York City. The original webpage 202 can also include multiple numbers of the review 204. In this example, the original webpage 202 can include two types of the review 204 with a travel review title 208 of "NY FAVE" and "LOVE NY."

The review 204 can present fields 210. The fields 210 are defined as a particular area on the review 204 that provides information to the viewer. For example, one of the fields 210 can represent the travel review title 208.

The fields 210 can include a travel review title 208, a travel review time 212, a travel review rating 214, a travel review content 216, or a combination thereof. The travel review title 208 is defined as a heading that specifies the title of the review 204. For example, the first of the travel review title 208 of the review 204 can represent "NY FAVE" and the second of the travel review title 208 of the review 204 can represent "LOVE NY."

The travel review time 212 is defined as the time, the date, or a combination thereof of when the submission of the review 204 was made to the original webpage 202. For example, the travel review time 212 can represent "09/13/2010."

The travel review rating 214 is defined as an appraisal value submitted as part of the review 204 to the original webpage 202 by the travelers to rate the point of interest 206. For example, one traveler can rate three stars as the travel review rating 214 and another traveler can rate two stars as the travel review rating 214 for New York City at the original webpage 202.

The travel review content 216 is defined as a summary of critique, comment, or a combination thereof submitted as part of the review 204 to the original webpage 202. For example, one traveler can write "Can't get enough of great food!!" as the travel review content 216 for visiting New York City.

Referring now to FIG. 3, therein is shown an example of a display format 302 of the review 204 for the point of interest 206. The display format 302 is defined as a protocol for formatting and displaying documents on the World Wide Web. The display format 302 can be a standard protocol. For example, the display format 302 can be Hyper Text Markup Language (HTML), Extensible Markup Language (XML), or a combination thereof.

For a further example, the review 204 on the original webpage 202 can be expressed using the display format 302. Additionally, the travel review title 208, the travel review time 212, the travel review rating 214, the travel review content 216, or a combination thereof can also be expressed using the display format 302. For a specific example, the display format 302 representing the travel review title 208 can be "/body/div[2]/div[2]/div[2]/div[4]/div[2]/div[2]/div[2]/div[1]/a."

"/body" or "/div" is an example of elements and attributes in XML or HTML document. The navigation system 100 can utilize the XML Path Language (XPath) to navigate through elements and attributes in a XML or HTML document. XPath is a language for finding information in an XML document.

XPath is also syntax for defining parts of an XML document. Furthermore, XPath uses path expressions to select nodes or node-set in an XML document. These path expressions are similar to the expression for traditional computer file system.

An identical segmentation 304 is defined as a part of the canonical XPath or partial canonical XPath shared by each of the fields 210 of FIG. 2 within the same submission of the review 204 in the original webpage 202, but unique from the fields 210 that exist in the other submission of the review 204 in the original webpage 202. The canonical XPath is the canonical form of XPath of an element in HTML DOM tree. The canonical form is a standard way of presenting the object. The canonical XPaths includes HTML tags and their corresponding orders appearing in the HTML document object model (DOM) tree.

For example, FIG.3 can illustrate the original webpage 202 with the multiple numbers of submissions for the review 204. The travel review title 208, the travel review time 212, the travel review rating 214, and the travel review content 216 from the first submission of the review 204 can share the identical segmentation 304 representing "body/div[2]/div[2]/div[2]/div[4]/div[2]/div[2]/div[2]." For a specific example, the identical segmentation 304 for the travel review title 208 representing "NY FAVE" from the first submission of the review 204 can be different from the travel review title 208 representing "LOVE NY" from the second submission of the review 204. For a further example, the identical segmentation 304 for the travel review title 208 representing "LOVE NY" can be "body/div[2]/div[2]/div[2]/div[4]/div[2]/div[2]/div[3]."

As illustrated in FIG. 3, the canonical XPath of each of the fields 210 in the different submissions of the review 204 can look similar having same ending tags and parent tags with one different numerical order in the path. On the other hand, the canonical XPath of the fields 210 in the same submission of the review 204 have partially same parents both in tags and numerical orders. The partial canonical XPath represents the partially same parents both in tags and numerical orders shared by the fields 210 in the same submission of the review 204. Details regarding the generation of the identical segmentation 304 will be discussed later.

For a further example, the navigation system 100 can group the fields 210 based on the fields 201 sharing the identical segmentation 304. One of the fields 210 can be the travel review title 208 representing "NY FAVE." The navigation system 100 can group other types of the fields 210, such as the travel review time 212, which shares the identical segmentation 304, with the travel review title 208. Details regarding the navigation system 100 grouping the fields 210 will be discussed later.

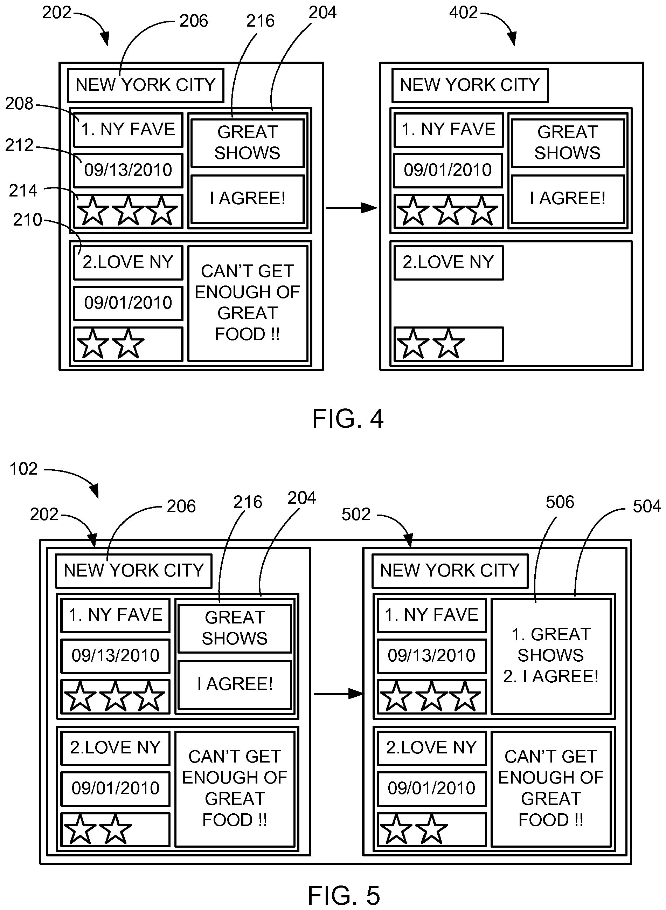

Referring now to FIG. 4, therein is shown an example of an extracted webpage 402 failing to include some of the fields 210 for the review 204 from the original webpage 202. The extracted webpage 402 is defined as a webpage with an extraction of the fields 210 of the review 204 from the original webpage 202 without the benefit of utilizing the present invention.

For example, the original webpage 202 is as illustrated in FIG. 2. A navigation system without XPath repetition based field alignment mechanism can generate the extracted webpage 402. However, without the benefit of utilizing the navigation system 100, the extracted webpage 402 can have some of the fields 210 missing, as the navigation system without XPath repetition based field alignment mechanism can fail to extract all the fields 210 from the review 204. Additionally, the navigation system without XPath repetition based field alignment mechanism can fail to extract all of the fields 210 from the review 204.

FIG. 4 illustrates the navigation system without XPath repletion based field alignment mechanism failing to extract all of the fields 210. For example, the first submission of the review 204 for the extracted webpage 402 can include the travel review title 208, but fail to include the travel review time 212 for the first submission of the review 204. Instead, the extracted webpage 402 can include the travel review time 212 for the second submission of the review 204 for the first submission of the review 204. For another example, the second of the review 204 can fail to include the travel review content 216 and the travel review time 212.

Referring now to FIG. 5, therein is shown an example of the first device 102 extracting all of the fields 210 for the review 204 from the original webpage 202 to generate a revised webpage 502 for the point of interest 206. The revised webpage 502 is defined as a webpage that the navigation system 100 had generated by extracting all of the fields 210 of the review 204 from the original webpage 202. For example, the original webpage 202 is as illustrated in FIG. 2.

The navigation system 100 can generate the revised webpage 502 by compiling a revised review 504 that includes all of the fields 210 presented in the review 204 of the original webpage 202. Details regarding the navigation system 100 generating the revised webpage 502 will be discussed later.

The revised review 504 is defined as the review 204 which the navigation system 100 had generated by selecting the fields 210 that shared the identical segmentation 304 of FIG. 3. Details regarding the generation of the revised review 504 will be discussed later.

A merged field 506 is defined as the fields 210 that have been merged, because the fields 210 contain multiple entries which share the display format 302 in its entirety. More specifically, the navigation system 100 can generated the merged field 506 by merging the fields 210. For example, the travel review content 216 for the first submission of the review 204 can include two entries. More specifically, the first submission of the travel review content 216 can represent "GREAT SHOWS" and the second submission of the travel review content 216 can represent "I AGREE."

Since both entries can represent the travel review content 216 for the first submission of the review 204, the entries can share not only just the identical segmentation 304, but also the display format 302 in its entirety. As a result, the navigation system 100 can merge the fields 210 to generate the merged field 506 to be displayed on the revised review 504. Details regarding the generation of the merged field 506 will be discussed later.

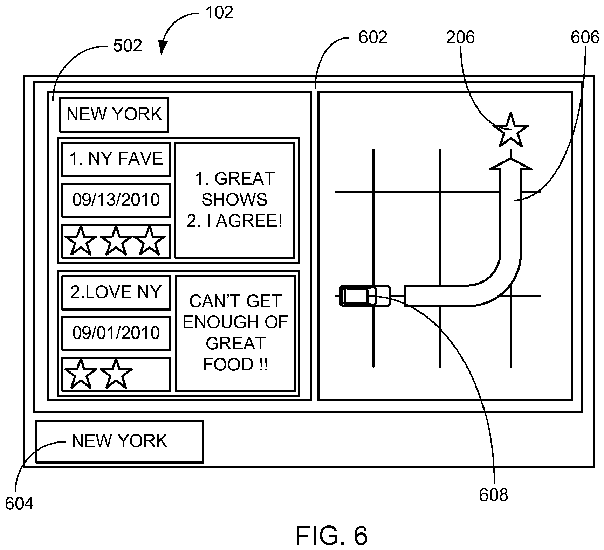

Referring now to FIG. 6, therein is shown a display example of a display interface 602 for the first device 102. The display interface 602 can display the revised webpage 502 generated by the navigation system 100.

An entry 604 is defined as a selection into the first device 102 made by the user, the navigation system 100, or a combination thereof from the revised webpage 502 to reach the point of interest 206. For example, the entry 604 can represent a manual typing, an oral command, or a combination thereof.

A travel route 606 is defined as a path that a user of the navigation system 100 can take to reach from a current location 608 to the point of interest 206. The current location 608 is defined as the current physical location of the navigation system 100. For example, the travel route 606 can represent a path from the current location 608 representing Edgewater, New Jersey to the point of interest 206 representing New York City.

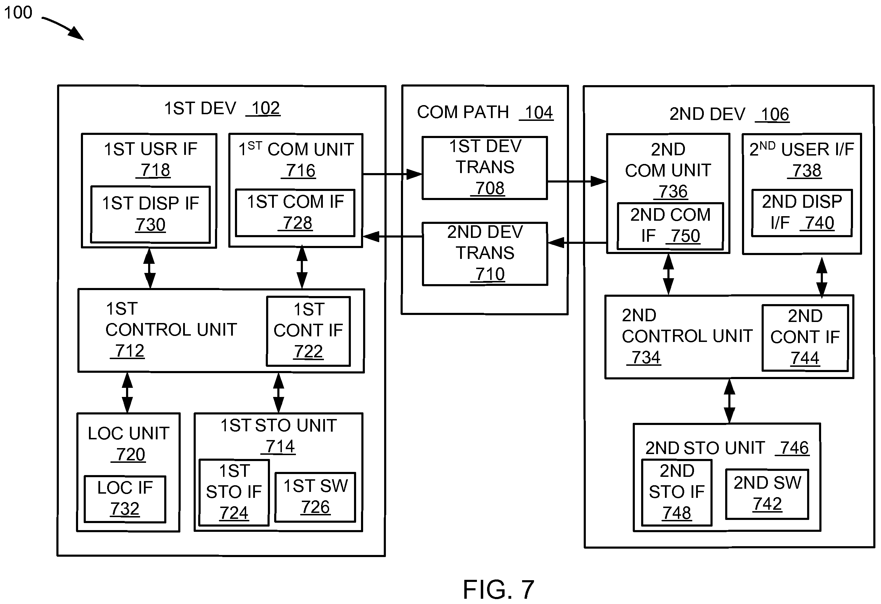

Referring now to FIG. 7, therein is shown an exemplary block diagram of the navigation system 100. The navigation system 100 can include the first device 102, the communication path 104, and the second device 106. The first device 102 can send information in a first device transmission 708 over the communication path 104 to the second device 106. The second device 106 can send information in a second device transmission 710 over the communication path 104 to the first device 102.

For illustrative purposes, the navigation system 100 is shown with the first device 102 as a client device, although it is understood that the navigation system 100 can have the first device 102 as a different type of device. For example, the first device 102 can be a server.

Also for illustrative purposes, the navigation system 100 is shown with the second device 106 as a server, although it is understood that the navigation system 100 can have the second device 106 as a different type of device. For example, the second device 106 can be a client device.

For brevity of description in this embodiment of the present invention, the first device 102 will be described as a client device and the second device 106 will be described as a server device. The present invention is not limited to this selection for the type of devices. The selection is an example of the present invention.

The first device 102 can include a first control unit 712, a first storage unit 714, a first communication unit 716, a first user interface 718, and a location unit 720. The first control unit 712 can include a first control interface 722. The first control unit 712 can execute a first software 726 to provide the intelligence of the navigation system 100. The first control unit 712 can be implemented in a number of different manners. For example, the first control unit 712 can be a processor, an embedded processor, a microprocessor, a hardware control logic, a hardware finite state machine (FSM), a digital signal processor (DSP), or a combination thereof. The first control interface 722 can be used for communication between the first control unit 712 and other functional units in the first device 102. The first control interface 722 can also be used for communication that is external to the first device 102.

The first control interface 722 can receive information from the other functional units or from external sources, or can transmit information to the other functional units or to external destinations. The external sources and the external destinations refer to sources and destinations external to the first device 102.

The first control interface 722 can be implemented in different ways and can include different implementations depending on which functional units or external units are being interfaced with the first control interface 722. For example, the first control interface 722 can be implemented with a pressure sensor, an inertial sensor, a microelectromechanical system (MEMS), optical circuitry, waveguides, wireless circuitry, wireline circuitry, or a combination thereof.

The location unit 720 can generate location information, current heading, and current speed of the first device 102, as examples. The location unit 720 can be implemented in many ways. For example, the location unit 720 can function as at least a part of a global positioning system (GPS), an inertial navigation system, a cellular-tower location system, a pressure location system, or any combination thereof.

The location unit 720 can include a location interface 732. The location interface 732 can be used for communication between the location unit 720 and other functional units in the first device 102. The location interface 732 can also be used for communication that is external to the first device 102.

The location interface 732 can receive information from the other functional units or from external sources, or can transmit information to the other functional units or to external destinations. The external sources and the external destinations refer to sources and destinations external to the first device 102.

The location interface 732 can include different implementations depending on which functional units or external units are being interfaced with the location unit 720. The location interface 732 can be implemented with technologies and techniques similar to the implementation of the first control interface 722.

The first storage unit 714 can store the first software 726. The first storage unit 714 can also store the relevant information, such as advertisements, points of interest (POI), navigation routing entries, or any combination thereof.

The first storage unit 714 can be a volatile memory, a nonvolatile memory, an internal memory, an external memory, or a combination thereof. For example, the first storage unit 714 can be a nonvolatile storage such as non-volatile random access memory (NVRAM), Flash memory, disk storage, or a volatile storage such as static random access memory (SRAM).

The first storage unit 714 can include a first storage interface 724. The first storage interface 724 can be used for communication between the location unit 720 and other functional units in the first device 102. The first storage interface 724 can also be used for communication that is external to the first device 102.

The first storage interface 724 can receive information from the other functional units or from external sources, or can transmit information to the other functional units or to external destinations. The external sources and the external destinations refer to sources and destinations external to the first device 102.

The first storage interface 724 can include different implementations depending on which functional units or external units are being interfaced with the first storage unit 714. The first storage interface 724 can be implemented with technologies and techniques similar to the implementation of the first control interface 722.

The first communication unit 716 can enable external communication to and from the first device 102. For example, the first communication unit 716 can permit the first device 102 to communicate with the second device 106 of FIG. 1, an attachment, such as a peripheral device or a computer desktop, and the communication path 104.

The first communication unit 716 can also function as a communication hub allowing the first device 102 to function as part of the communication path 104 and not limited to be an end point or terminal unit to the communication path 104. The first communication unit 716 can include active and passive components, such as microelectronics or an antenna, for interaction with the communication path 104.

The first communication unit 716 can include a first communication interface 728. The first communication interface 728 can be used for communication between the first communication unit 716 and other functional units in the first device 102. The first communication interface 728 can receive information from the other functional units or can transmit information to the other functional units.

The first communication interface 728 can include different implementations depending on which functional units are being interfaced with the first communication unit 716. The first communication interface 728 can be implemented with technologies and techniques similar to the implementation of the first control interface 722.

The first user interface 718 allows a user (not shown) to interface and interact with the first device 102. The first user interface 718 can include an input device and an output device. Examples of the input device of the first user interface 718 can include a keypad, a touchpad, soft-keys, a keyboard, a microphone, or any combination thereof to provide data and communication inputs.

The first user interface 718 can include a first display interface 730. The first display interface 730 can include a display, a projector, a video screen, a speaker, or any combination thereof.

The first control unit 712 can operate the first user interface 718 to display information generated by the navigation system 100. The first control unit 712 can also execute the first software 726 for the other functions of the navigation system 100, including receiving location information from the location unit 720. The first control unit 712 can further execute the first software 726 for interaction with the communication path 104 via the first communication unit 716.

The second device 106 can be optimized for implementing the present invention in a multiple device embodiment with the first device 102. The second device 106 can provide the additional or higher performance processing power compared to the first device 102. The second device 106 can include a second control unit 734, a second communication unit 736, and a second user interface 738.

The second user interface 738 allows a user (not shown) to interface and interact with the second device 106. The second user interface 738 can include an input device and an output device. Examples of the input device of the second user interface 738 can include a keypad, a touchpad, soft-keys, a keyboard, a microphone, or any combination thereof to provide data and communication inputs. Examples of the output device of the second user interface 738 can include a second display interface 740. The second display interface 740 can include a display, a projector, a video screen, a speaker, or any combination thereof.

The second control unit 734 can execute a second software 742 to provide the intelligence of the second device 106 of the navigation system 100. The second software 742 can operate in conjunction with the first software 726. The second control unit 734 can provide additional performance compared to the first control unit 712.

The second control unit 734 can operate the second user interface 738 to display information. The second control unit 734 can also execute the second software 742 for the other functions of the navigation system 100, including operating the second communication unit 736 to communicate with the first device 102 over the communication path 104.

The second control unit 734 can be implemented in a number of different manners. For example, the second control unit 734 can be a processor, an embedded processor, a microprocessor, a hardware control logic, a hardware finite state machine (FSM), a digital signal processor (DSP), or a combination thereof.

The second control unit 734 can include a second controller interface 744. The second controller interface 744 can be used for communication between the second control unit 734 and other functional units in the second device 106. The second controller interface 744 can also be used for communication that is external to the second device 106.

The second controller interface 744 can receive information from the other functional units or from external sources, or can transmit information to the other functional units or to external destinations. The external sources and the external destinations refer to sources and destinations external to the second device 106.

The second controller interface 744 can be implemented in different ways and can include different implementations depending on which functional units or external units are being interfaced with the second controller interface 744. For example, the second controller interface 744 can be implemented with a pressure sensor, an inertial sensor, a microelectromechanical system (MEMS), optical circuitry, waveguides, wireless circuitry, wireline circuitry, or a combination thereof.

A second storage unit 746 can store the second software 742. The second storage unit 746 can also store the relevant information, such as advertisements, points of interest (POI), navigation routing entries, or any combination thereof. The second storage unit 746 can be sized to provide the additional storage capacity to supplement the first storage unit 714.

For illustrative purposes, the second storage unit 746 is shown as a single element, although it is understood that the second storage unit 746 can be a distribution of storage elements. Also for illustrative purposes, the navigation system 100 is shown with the second storage unit 746 as a single hierarchy storage system, although it is understood that the navigation system 100 can have the second storage unit 746 in a different configuration. For example, the second storage unit 746 can be formed with different storage technologies forming a memory hierarchal system including different levels of caching, main memory, rotating media, or off-line storage.

The second storage unit 746 can be a volatile memory, a nonvolatile memory, an internal memory, an external memory, or a combination thereof. For example, the second storage unit 746 can be a nonvolatile storage such as non-volatile random access memory (NVRAM), Flash memory, disk storage, or a volatile storage such as static random access memory (SRAM).

The second storage unit 746 can include a second storage interface 748. The second storage interface 748 can be used for communication between the location unit 720 and other functional units in the second device 106. The second storage interface 748 can also be used for communication that is external to the second device 106.

The second storage interface 748 can receive information from the other functional units or from external sources, or can transmit information to the other functional units or to external destinations. The external sources and the external destinations refer to sources and destinations external to the second device 106.

The second storage interface 748 can include different implementations depending on which functional units or external units are being interfaced with the second storage unit 746. The second storage interface 748 can be implemented with technologies and techniques similar to the implementation of the second controller interface 744.

The second communication unit 736 can enable external communication to and from the second device 106. For example, the second communication unit 736 can permit the second device 106 to communicate with the first device 102 over the communication path 104.

The second communication unit 736 can also function as a communication hub allowing the second device 106 to function as part of the communication path 104 and not limited to be an end point or terminal unit to the communication path 104. The second communication unit 736 can include active and passive components, such as microelectronics or an antenna, for interaction with the communication path 104.

The second communication unit 736 can include a second communication interface 750. The second communication interface 750 can be used for communication between the second communication unit 736 and other functional units in the second device 106. The second communication interface 750 can receive information from the other functional units or can transmit information to the other functional units.

The second communication interface 750 can include different implementations depending on which functional units are being interfaced with the second communication unit 736. The second communication interface 750 can be implemented with technologies and techniques similar to the implementation of the second controller interface 744.

The first communication unit 716 can couple with the communication path 104 to send information to the second device 106 in the first device transmission 708. The second device 106 can receive information in the second communication unit 736 from the first device transmission 708 of the communication path 104.

The second communication unit 736 can couple with the communication path 104 to send information to the first device 102 in the second device transmission 710. The first device 102 can receive information in the first communication unit 716 from the second device transmission 710 of the communication path 104. The navigation system 100 can be executed by the first control unit 712, the second control unit 734, or a combination thereof.

For illustrative purposes, the second device 106 is shown with the partition having the second user interface 738, the second storage unit 746, the second control unit 734, and the second communication unit 736, although it is understood that the second device 106 can have a different partition. For example, the second software 742 can be partitioned differently such that some or all of its function can be in the second control unit 734 and the second communication unit 736. Also, the second device 106 can include other functional units not shown in FIG. 7 for clarity.

The functional units in the first device 102 can work individually and independently of the other functional units. The first device 102 can work individually and independently from the second device 106 and the communication path 104.

The functional units in the second device 106 can work individually and independently of the other functional units. The second device 106 can work individually and independently from the first device 102 and the communication path 104.

For illustrative purposes, the navigation system 100 is described by operation of the first device 102 and the second device 106. It is understood that the first device 102 and the second device 106 can operate any of the modules and functions of the navigation system 100. For example, the first device 102 is described to operate the location unit 720, although it is understood that the second device 106 can also operate the location unit 720.

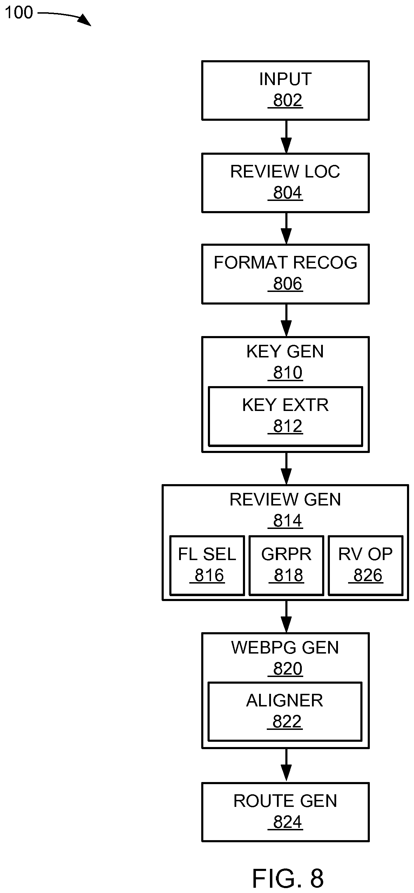

Referring now to FIG. 8, therein is shown a control flow of the navigation system 100. The navigation system 100 can include an input module 802. The input module 802 receives the entry 604 of FIG. 6 from the user, the navigation system 100, or a combination thereof. For example, the input module 802 can receive the entry 604 for the point of interest 206 of FIG. 2.

The navigation system 100 can include a review locator module 804. The review locator module 804 locates the webpage on the World Wide Web that provides the review 204. For example, the review locator module 804 can locate the review 204 of FIG. 2 on the original webpage 202 of FIG. 2 for the point of interest 206 via the first control interface 722 of FIG. 7.

The navigation system 100 can include a format recognizer module 806. The format recognizer module 806 recognizes the protocol used for formatting and displaying the webpage. For example, the format recognizer module 806 can recognize the display format 302 of FIG. 3 of the original webpage 202 based on opening the source code for the webpage.

The navigation system 100 can include a key generator module 810. The key generator module 810 generates a partial canonical XPath as a key for identifying that partial canonical XPath is shared by the fields on the review 204. For example, the key generator module 810 can generate the identical segmentation 304 of FIG. 3 based on distinguishing the display format 302 for identifying the identical segmentation 304 shared by the fields 210.

The key generator module 810 can be shown in pseudo code format as the following pseudo code 1:

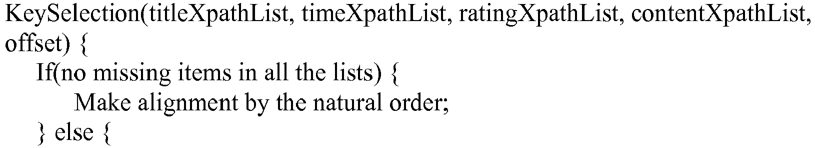

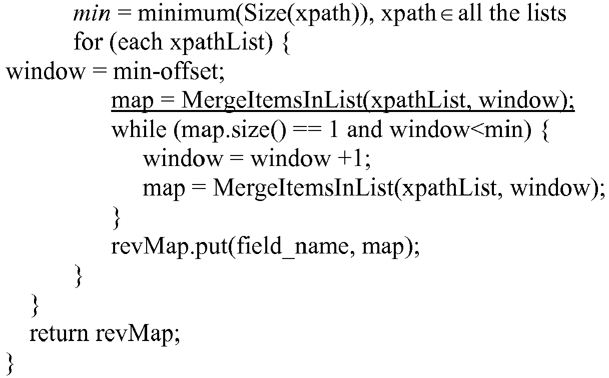

**Table 1 maps between the pseudo code and the specific elements:**

| Pseudo Code Parameters | Specification Elements |
|---|---|
| titleXpathList | the list for the travel review title 208 of FIG. 2 |
| timeXpathList | the list for the travel review time 212 of FIG. 2 |
| ratingXpathList | the list for the travel review rating 214 of FIG. 2 |
| contentXpathList | the list for the travel review content 216 of FIG. 2 |

"KeySelection ()" is defined as the method for generating the identical segmentation 304. For example, "KeySelection ()" can have five inputs. For a specific example, pseudo code 1 receives "titleXpathList," "timeXpathList," "ratingXpathList," "contentXpathList," and "offset."

"xpathList" is defined as a list of canonical XPaths that represent the fields 210. For example, "titleXpathList," "timeXpathList," "ratingXpathList," and "contentXpathList" can be examples of "xpathList." For a further example, "xpathList" can include all of the possible XPaths for the particular type of the fields 210 from each of the review 204. For a more specific example, "titleXpathList" can include the canonical XPaths for each of the travel review title 208 from multiple numbers of the review 204 as illustrated in FIG. 2.

"offset" is an empirical number used for defining the number of segments for the xpath considered by the key generator module 810 to generate the identical segmentation 304. Details regarding the "offset" will be discussed later.

"min" is defined as the least number of segments of xpath out of all of the XPaths from all of the "xpathList." "minimum(Size(xpath)" is defined as a method that calculates the number of segments in the each of the xpath. For example, "minimum(Size(xpath)" can calculate the segments for each of the xpath for the travel review title 208 from "titleXpathList," the travel review time 212 from "timeXpathList," the travel review rating 214 from "ratingXpathList," the travel review content 216 from the "contentXpathList," or a combination thereof.

For a specific example, the number of segments for the xpath for the travel review title 208 representing "NY FAVE" from the first submission of the review 204 can be 12 segments. 12 segments can be the least number of segments out of all of XPaths from each "xpathList" considered. The key generator module 810 can set the "min" to 12.

"for (each xpathList)" allows the key generator module 810 to consider all of the "xpathList" one list at a time. For example, the key generator module 810 can consider the "titleXpathList" first and the "timeXpathList" next.

"window" is defined as the number of segments of the xpath considered by the key generator module 810 to determine whether each of the fields 210 shares the identical segmentation 304. The key generator module 810 calculates the "window" by "window = min - offset."

For example, "min" can be 12. "offset" can be "min - 1." Subsequently, "window" can be 1. Based on the size of the "window," the key generator module 810 can consider one segment for all of the xpath. The size of the "window" can be increased. Details regarding increasing the "window" will be discussed later.

"offset" can be defined differently. For example, if the first five segments for all of the XPaths are known to be always same, "offset" can be "min - 5." Subsequently, the key generator module 810 can skip the first five segments of the xpath to reduce computation burden.

"map" is defined as an associative array or a map object with indices that use arbitrary objects, not integers. The key generator module 810 can set "map" by "map = MergeItemInList(xpathList, window)." Details regarding the function "MergeItemInList(xpathList, window)" will be discussed later.

The key generator module 810 can establish a condition "while (map.size() == 1 and window < min)" to determine whether the "map" contains more than one "KEY." "KEY" is defined as the candidates of the identical segmentation 304. However, the candidates can become the identical segmentation 304 when the XPaths for the fields 210 in the same "xpathList" become unique from each other. Details regarding the candidates becoming the identical segmentation 304 will be discussed later.

While the condition is met, the key generator module 810 executes the "window = window +1" and "map = MergeItemInList(xpathList, window)." To determine the validity of the condition, the key generator module 810 executes "map.size()" to determine whether the "map" includes more than one "KEY." More specifically, "map.size()" returns an int that gives the number of "KEY" in the "map."

If there are more than one "KEY," "map.size()" will return an int greater than one. Furthermore, if the "map.size()" is greater than one, the "map" can contain more than one of the identical segmentation 304. Details regarding the "map" having more than one of the identical segmentation 304 will be discussed later.

The key generator module 810 executes "window = window + 1" to expand the number of segments of the xpath considered. While the "window" is less than "min," the condition established in "while()" will be met. Details regarding the key generator module 810 calling "MergeItemInList(xpathList, window)" within the condition established in "while()"will be discussed later.

If "map.size()" returns an int greater than one and the "window" is equal to or greater than "min," the condition established in "while()" fails, and the key generator module 810 can execute "revMap.put(field_name, map)." "map.size()" that is greater than one illustrates that the key generator module 810 had generated the identical segmentation 304 by extracting the candidate of the identical segmentation 304 for the fields 210 that is unique. Details regarding the extraction of the "KEYS" or the candidate of the identical segmentation 304 will be discussed later.

"field_name" is defined as the name of the fields 210. For example, if the fields 210 represent the travel review content 216, the "field_name" can be "content."

The key generator module 810 can execute the "revMap.put()" to associate the "map" returned by the "MergeItemsInList()" to the "field_name" for each of the "xpathList." For example, the "map" can include the identical segmentation 304 and the "text" for the fields 210. For a specific example, the "map" can include the identical segmentation 304 representing "body/div[2]/div[2]/div[2]/div[4]/div[2]/div[2]/div[2]" and the "text" representing "NY FAVE" for the travel review title 208.

The key generator module 810 can execute "revMap.put()" until the identical segmentation 304 is generated for each "xpathList." "revMap" can include each of the fields 210 with the identical segmentation 304 and the "text" associated to the fields 210. The key generator module 810 can execute the "revMap.put()" to associate "title," a "field_name," to the identical segmentation 304 and the corresponding "text" for the travel review title 208.

It has been discovered that the present invention provides the navigation system 100 to generate the identical segmentation 304 to accurately associate the fields 210 to the review 204 for a safer operation of the vehicle, the navigation system 100, and other user interface system for the navigation system 100. By discovering the unique XPaths as the identical segmentation 304 for each of the fields 210, the navigation system 100 can organize the information provided by the review 204 in accordance to the identical segmentation 304 shared. The proper organization leads to accurate generation of the revised webpage 502 of FIG. 4. Subsequently, the revised webpage 502 can aid the safer operation of the vehicle, as the user can decide whether to reach the point of interest 206 based on considering the accurate information.

The key generator module 810 includes a key extractor module 812 to execute function "MergeItemInList(xpathList, window)." The key extractor module 812 extracts the partial canonical xpath as a candidate for the key from each of XPaths in the list. Furthermore, the key extractor module 812 extracts the partial canonical xpath unique to each of the review 204. For example, the key extractor module 812 can extract the identical segmentation 304 based on distinguishing the display format 302 for identifying the fields 210 sharing the identical segmentation 304.

The key extractor module 812 can be shown in pseudo code format as the following pseudo code 2:

```
MergeItemsInList(xpathList, window) {
         Map map = new HashMap ();
         for (each xpath in the list) {
           KEY = Sub(xpath, 0, window);
           if (map.containKey(KEY)) {
              text = Text(xpath) + map.get(KEY);
              map.put(KEY, text);
           } else {
              map.put(KEY, Text(xpath));
           }
          }
         return map;
       }
```

**Table 2 maps between the pseudo code and the specific elements:**

| Pseudo Code Parameters | Specification Elements |
|---|---|
| KEY | the identical segmentation 304 |

"MergeItemInList ()" is defined as the method for extracting the candidates for the identical segmentation 304. "for(each xpath in the list)" allows the key extractor module 812 to consider all of the XPaths from each "xpathList." For example, the key extractor module 812 can consider all the XPaths in the "titleXpathList."

The key extractor module 812 can extract the candidate for the identical segmentation 304 with "Sub(xpath, 0, window)." For example, "0" can represent the starting point of where the segmentation of the xpath begins and the "window" can represent the ending point of where the segmentation of the xpath ends. "window" can be 2. If the xpath is "/body/div[2]/div[4]," the key extractor module 812 can segment from "/body" to "div/[2]." More specifically, "/body/div[2]" can be the partial canonical xpath or a candidate for the identical segmentation 304.

"if(map.containsKey(KEY)" and "else" is defined as a condition to determine whether the "KEY" already exists in the "map." For example, if the "KEY" already exists in the "map," the key extractor module 812 can call "text = Text(xpath) + map.get(KEY)" and "map.put(KEY, text)." If the "KEY" does not exist in the "map", the key extractor module 812 can call "map.put(KEY, text)."

For a specific example, the "xpathList" can be "ratingXpathList." There can be two XPaths representing the travel review rating 214 in the "ratingXpathList," as illustrated in FIG. 2.

Initially, no "KEY" exists in the "map." The key extractor module 812 extracts the "KEY" or the candidate for the identical segmentation 304 with "Sub(xpath, 0, window)." The condition "if(map.containKey(KEY)" fails, because "KEY" does not exist in the "map."

The key extractor module 812 can call the "else" condition and execute "map.put(KEY, Text(xpath))" to set the "KEY" and the "text" associated with the "KEY" into the "map." For example, the "KEY" can be "/body/div[2]/" and the "text" can be "three stars," as illustrated in FIG. 2.

According to the "for()," if more XPaths exist in the "xpathList," the key extractor module 812 can extract the "KEY" for the next xpath in the "xpathList." If "Sub(xpath, 0, window" extracts the identical xpath as the candidate for the identical segmentation 304 with the xpath previously extracted from the same "xpathList," the condition for "if(map.containKey(KEY)" will be met, and "text = Text(xpath) + map.get(KEY)" will be called. The key extractor module 812 can set the "text" by combining the "text" that already existed in the "map" with the new "text" associated with the current "xpath."

For example, as illustrated in FIG. 5, the review 204 with the travel review title 208 representing "NY FAVE" can include multiple number of entries, such as "GREAT SHOWS" and "I AGREE," for the travel review content 216. Since the two entries appear on the same section of the review 204, the two entries can share identical xpath. The key extractor module 812 can execute "text = Text(xpath) + map.get(KEY)" to generate the merged field 506 of FIG. 5 sharing the same XPaths for generating the revised review 504 of FIG. 5.

The key extractor module 812 can also call the map.put(KEY, text)" to overwrite the "text" that already exist in the "map." The key extractor module 812 can return the "map" with a "KEY" with a "text" associated with the "KEY."

The key generator module 810 can call the key extractor module 812 to execute "MergeItemInList(xpathList, window)" within the condition established in "while(map.size() == 1 and window < min)." "MergeItemInList(xpathList, window)" is as discussed previously. However, while the conditions established in "while()" are met, the key extractor module 812 will execute "window +1" to incrementally increase the value of "window" and continue to execute "MergeItemInList(xpathList, window)."

The key extractor module 812 can continue extracting the candidate for the identical segmentation 304 or "KEY" until the key extractor module 812 discovers a candidate of the identical segmentation 304 that is unique for the fields 210. For example, the "KEY" representing "/body/div[2]/div[2]/div[2]/div[3]/div[2]/div/div[4]/div[3]/" can already exist in the "map." The key extractor module 812 can extract another "KEY" representing /body/div[2]/div[2]/div[2]/div[3]/div[2]/div/div[4]/div[6]/ by executing "Sub()" as discussed previously.

Since "/body/div[2]/div[2]/div[2]/div[3]/div[2]/div/div[4]/div[6]/" did not exist in the "map," the "KEY" is unique, thus, the "if(map.containKey(KEY))" condition fails. Instead, the "else" condition is called, and the key extractor module 812 can execute "map.put(KEY,Text(xpath))." Subsequently, the key extractor module 812 had discovered unique "KEY" or the identical segmentation 304 by extracting the sufficient number of segmentation to differentiate one xpath from another for the fields 210. The key extractor module 812 will continue extracting the identical segmentation 304 for the fields 210 as conditioned in the "for()."

It has also been discovered that the present invention provides the navigation system 100 to extract the identical segmentation 304 unique to the fields 210 and the review 204 for a safer operation of the vehicle, the navigation system 100, and other user interface system for the navigation system 100. The failure to extract all the fields 210 and align the fields 210 from one webpage to another webpage continues to be a paramount concern for the consumer. Inadequate extraction and alignment of the fields 210 after generating the extracted webpage 402 by the navigation system without XPath repetition based filed alignment mechanism decreases the benefit of using the navigation tool. However, the extraction of the identical segmentation 304 unique to the fields 210 can aid the key generator module 810 to generate the identical segmentation 304. More specifically, the extraction of the identical segmentation 304 can aid the navigation system 100 to group the fields 210 based on the identical segmentation 304 shared for accurate generation of the revised review 504. Subsequently, the revised webpage 502 that includes the revised review 504 can aid the safer operation of the vehicle, as the user can decide whether to reach the point of interest 206 based on considering the accurate information.

The navigation system 100 can include a review generator module 814. The review generator module 814 generates the revised version of the review 204. For example, the review generator module 814 can generate the revised review 504 based on aligning the fields 210 sharing the identical segmentation 304.

The review generator module 814 can be shown in pseudo code format as the following pseudo code 3:

```
       Alignment(revMap) {
          List<Review> rev = new LinkedList<Review>();
          map = the inner map of revMap which has maximum number of items;
          for (each KEY in map) {
              if (revMap.containKey("title")) {
       title = revMap.get("title").get(KEY);
              }
              if (revMap.containKey("time")) {
       time = revMap.get("time").get(KEY);
              }
              if (revMap.containKey("rating")) {
       rating = revMap.get("rating").get(KEY);
              }
              if (revMap.containKey("content")) {
       content = revMap.get("content").get(KEY);
              }
              Review item = new Review(title, content, time, rating);
              rev.add(item);
          }
         return rev;
}
```

**Table 3 maps between the pseudo code and the specific elements:**

| Pseudo Code Parameters | Specification Elements |
|---|---|
| title | the travel review title 208 |
| time | the travel review time 212 |
| rating | the travel review rating 214 |
| content | the travel review content 216 |
| rev | the revised review 504 |

The review generator module 814 includes a field selector module 816. The field selector module 816 selects the fields that share the key partial canonical XPath. For example, the field selector module 816 can select the fields 210 based on identifying the identical segmentation 304 shared for grouping the fields 210.

The field selector module 816 can execute the following functions to select the fields 210:

```
       title = revMap.get("title").get(KEY);
       time = revMap.get("time").get(KEY);
       rating = revMap.get("rating").get(KEY);
       content = revMap.get("content").get(KEY);
```

As discussed previously, the "revMap" generated by the key generator module 810 can contain the fields 210 associated with the identical segmentation 304. The condition established in "for(each KEY in map)" allows the field selector module 816 to select the fields 210 that share the identical segmentation 304 with other types of the fields 210 that are also associated with the identical segmentation 304. For example, the field selector module 816 can select the travel review title 208, the travel review time 212, the travel review time 212, the travel review content 216, or a combination thereof that shares the identical segmentation 304 for the generation of the revised review 504.

For a specific example, "title = revMap.get("title").get(KEY)" can select the travel review title 208 and the identical segmentation 304 associated with the travel review title 208. For another example, "time = revMap.get("time").get(KEY)" can select the travel review time 212 and the identical segmentation 304 associated with the travel review time 212. Furthermore, the travel review title 208 and the travel review time 212 can share the identical segmentation 304.

The review generator module 814 includes a grouper module 818. The grouper module 818 groups the selected fields by identifying the key canonical XPaths shared by the fields. For example, the grouper module 818 can group the fields 210 sharing the identical segmentation 304.

For a further example, the grouper module 818 can group the fields 210 sharing the identical segmentation 304 with the travel review title 208, the travel review time 212, the travel review rating 214, the travel review content 216, or a combination thereof for displaying on the first device 102. The grouper module 818 can execute the following function to group the fields 210 sharing the identical segmentation 304: "Review item = new Review(title, content, time, rating)." "item" is defined as an object that represents fields 210 in the revised review 504. The grouper module 818 can execute "Review item = Review ()" to group all of the fields 210 that share the identical segmentation 304 for generating the revised review 504.

The review generator module 814 includes a revision output module 826. The revision output module 826 returns the "rev" that includes the "item." For example, the revision output module 826 can generate the revised review 504 based on aligning the fields 210 sharing the identical segmentation 304.

The revision output module 826 can generate the revised review 504 by executing the following functions: "rev.add(item)" and "return rev." "rev" is defined as a list object that represents the revised review 504. By executing "rev.add(item)," the revision output module 826 can populate the fields 210 that share the identical segmentations 304 into the revised review 504. Subsequently, the revision output module 826 can generate the revised review 504 by executing "return rev."

It has further been discovered that the present invention provides the navigation system 100 to select the fields 210 sharing the identical segmentation 304 and group the fields 210 based on the identical segmentation 304 shared for a safer operation of the vehicle, the navigation system 100, and other user interface system within the vehicle. The selection of the fields 210 in accordance to the identical segmentation 304 shared aids an accurate delivery of the information for displaying to the user of the navigation system 100. The accurate delivery of the information can aid the safer operation of the vehicle, as the user can decide to travel to the point of interest 206 based on considering the accurate information.

The navigation system 100 can include a webpage generator module 820. The webpage generator module 820 generates the revised version of the webpage based on extracting the information from the original webpage 202. For example, the webpage generator module 820 can generate the revised webpage 502 based on aligning the fields 210 for displaying on the first device 102. For another example, the webpage generator module 820 can generate the revised webpage 502 based on aligning the merged field 506 in the revised review 504 for displaying on the first device 102.

The webpage generator module 820 includes an aligner module 822. The aligner module 822 aligns the fields that share the key canonical XPaths. For example, the aligner module 822 can align the fields 210 based on grouping the identical segmentation 304 shared for displaying on the first device 102.

As illustrated in FIG. 5, the aligner module 822 can align the fields 210 in the revised webpage 502 just as the fields 210 had been aligned in the original webpage 202 described in pseudo code 3. As discussed previously, the grouper module 818 can group the fields 210 sharing the identical segmentation 304 for generating the revised review 504 and the merged field 506 sharing not only the identical segmentation 304, but also sharing the display format 302 in its entirety.

Similarly to grouping the fields 210, the aligner module 822 can generate the revised webpage 502 based on compiling the revised review 504 that shares the identical segmentation 304 for displaying on the first device 102. By compiling the revised review 504 sharing the identical segmentation 304, the fields 210 that can be displayed on the revised review 504 are also aligned.

The navigation system 100 can include a route generator module 824. The route generator module 824 generates a path for the user to reach the target location. For example, the route generator module 824 can generate the travel route 606 of FIG. 6 based on selecting the point of interest 206 for displaying on the first device 102. The route generator module 824 can generate the travel route 606 from the current location 608 of FIG. 6 of the navigation system 100 to the point of interest 206.

The physical transformation from displaying the travel route 606 result in movement in the physical world, such as people using the first device 102, the vehicle, or a combination thereof, based on the operation of the navigation system 100. The user of the navigation system 100 can select the point of interest 206 from the revised webpage 502 after considering the revised review 504. The current location 608 can start from where the user had selected the point of interest 206, and the travel route 606 can start from the current location 608 to the point of interest 206. As the movement in the physical world occurs, the movement itself creates additional information that is converted back to the current location 608 for the continued operation of the navigation system 100 and to continue the movement in the physical world.

The first software 726 of FIG. 7 of the first device 102 of FIG. 7 can include the navigation system 100. For example, the first software 726 can include the input module 802, the review locator module 804, the format recognizer module 806, the key generator module 810, the review generator module 814, the webpage generator module 820, and the route generator module 824.

The first control unit 712 of FIG. 7 can execute the first software 726 for the input module 802 to receive the entry 604. The first control unit 712 can execute the first software 726 for the review locator module 804 to locate the review 204. The first control unit 712 can execute the first software 726 for the format recognizer module 806 to recognize the display format 302.

The first control unit 712 can execute the first software 726 for the key generator module 810 to generate the identical segmentation 304. The first control unit 712 can execute the first software 726 for the review generator module 814 to generate the revised review 504. The first control unit 712 can execute the first software 726 for the webpage generator module 820 to generate the revised webpage 502.

The first control unit 712 can execute the first software 726 for the route generator module 824 to generate the travel route 606. The first control unit 712 can execute the first display interface 730 of FIG. 7 to display the travel route 606.

The second software 742 of FIG. 7 of the second device 106 of FIG. 7 can include the navigation system 100. For example, the second software 742 can include the input module 802, the review locator module 804, the format recognizer module 806, the key generator module 810, the review generator module 814, the webpage generator module 820, and the route generator module 824.

The second control unit 734 of FIG. 7 can execute the second software 742 for the input module 802 to receive the entry 604. The second control unit 734 can execute the second software 742 for the review locator module 804 to locate the review 204. The second control unit 734 can execute the second software 742 for the format recognizer module 806 to recognize the display format 302.

The second control unit 734 can execute the second software 742 for the key generator module 810 to generate the identical segmentation 304. The second control unit 734 can execute the second software 742 for the review generator module 814 to generate the revised review 504. The second control unit 734 can execute the second software 742 for the webpage generator module 820 to generate the revised webpage 502.

The second control unit 734 can execute the second software 742 for the route generator module 824 to generate the travel route 606. The second control unit 734 can execute the second display interface 740 of FIG. 7 to display the travel route 606.

The navigation system 100 can be partitioned between the first software 726 and the second software 742. For example, the second software 742 can include the review locator module 804, the format recognizer module 806, the key generator module 810, the review generator module 814, the webpage generator module 820, and the route generator module 824. The second control unit 734 can execute modules partitioned on the second software 742 as previously described.

The first software 726 can include the input module 802. Based on the size of the first storage unit 714, the first software 726 can include additional modules of the navigation system 100. The first control unit 712 can execute the modules partitioned on the first software 726 as previously described.

The first user interface 718 of FIG. 7 can receive the entry 604 by the user, the navigation system 100, or a combination thereof for the input module 802. The first control unit 712 can operate the first communication unit 716 to send the entry 604 to the second device 106. The first control unit 712 can operate the first software 726 to operate the location unit 720.

The second communication unit 736 of FIG. 7 can send the travel route 606 to the first device 102 through the communication path 104 of FIG. 7. The travel route 606 can be displayed on the first display interface 730 and the second device 106.

It has yet further been discovered that the present invention provides the navigation system 100 for a safer operation of the vehicle, the navigation system 100, and other user interface system of the navigation system 100. By generating the identical segmentation 304, the navigation system 100 can align the fields 210 sharing the identical segmentation 304 for an accurate extraction of the fields 210 from the original webpage 202 to the revised webpage 502. The displaying of the revised review 504 on the revised webpage 502 having the fields 210 that share the identical segmentation 304 reduces the exposure of harm by permitting the user to make decision for traveling to the point of interest 206 based on accurate information. As a result, displaying the revised webpage 502 can aid the user of safer operation of the vehicle.

The navigation system 100 describes the module functions or order as an example. The modules can be partitioned differently. For example, the grouper module 818 and the field selector module 816 can be combined. Each of the modules can operate individually and independently of the other modules.

Furthermore, data generated in one module can be used by another module without being directly coupled to each other. For example, the route generator module 824 can receive the entry 604 for the point of interest 206 from the input module 802.

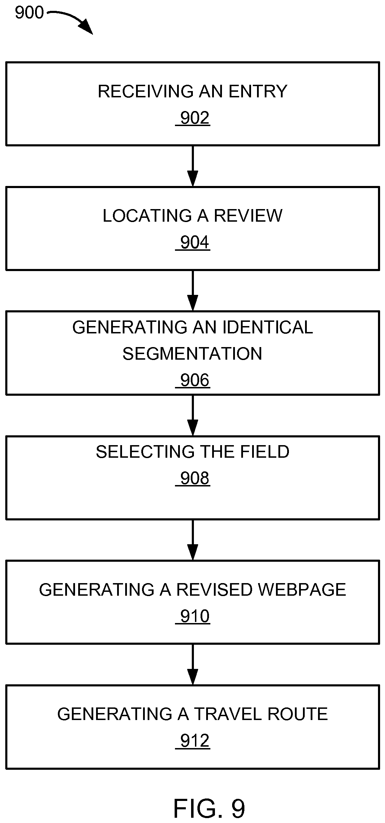

Referring now to FIG. 9, therein is shown a flow chart of a method 900 of operation of the navigation system 100 in a further example of the present invention. The method 900 includes: receiving an entry for a point of interest in a block 902; locating a review on an original webpage for the point of interest in a block 904; generating an identical segmentation shared by a field on the review from a display format of the original webpage in a block 906; selecting the field based on identifying the identical segmentation shared for grouping the field in a block 908; generating a revised webpage based on aligning the field in a block 910; and generating a travel route based on selecting the point of interest for displaying on a device in a block 912.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of the present invention is that it valuably supports and services the historical trend of reducing costs, simplifying systems, and increasing performance. These and other valuable aspects of the present invention consequently further the state of the technology to at least the next level.

## Claims

1. A method of operation of a navigation system (100) comprising:
receiving an entry (604) for a point of interest (206);
locating a review (204) on an original webpage (202) for the point of interest (206);
recognizing a display format (302) of the original webpage (202);
generating an identical segmentation (304) based on distinguishing the display format (302) for identifying the identical segmentation (304) shared by a number of fields (210), wherein the identical segmentation (304) is defined as a part of a canonical XPath or partial canonical XPath shared by the number of fields;
selecting the fields (210) based on identifying the identical segmentation (304) shared by the number of fields (210) for grouping the fields (210); and
generating a revised webpage (502) based on aligning the fields (210) for displaying on a device (102);
wherein generating the identical segmentation (304) comprises:
determining a window based on a difference between the least number of segments of the number of fields (210) and an offset for defining a number of considered segments for generating the identical segmentation (304);
extracting a map of candidates for the identical segmentation (304) based on the window for each of the fields (210);
merging the fields (210) of the number of fields (210) sharing a candidate; and
iteratively increasing the value of the window until the map for the window comprises more than one candidate or the window is equal to the least number of segments to determine the identical segmentation (304) for each of the fields (210).

2. The method as claimed in claim 1 further comprising:
grouping the fields (210) sharing the identical segmentation (304);
generating a revised review (504) based on aligning the fields (210) sharing the identical segmentation (304); and
wherein:
generating the revised webpage (502) includes generating the revised webpage (502) based on compiling the revised review (504) for displaying on the device (102).

3. The method as claimed in claim 1 wherein generating the revised webpage (502) includes aligning the fields (210) based on grouping the identical segmentation (304) shared for displaying on the device (102).

4. The method as claimed in claim 1 wherein generating the identical segmentation (304) includes extracting the identical segmentation (304) based on distinguishing the display format (302) for identifying the field sharing the identical segmentation (304).

5. The method as claimed in claim 1 further comprising:
generating a merged field (506) sharing the identical segmentation (304) for generating a revised review (504); and
wherein:
generating the revised webpage (502) includes generating the revised webpage (502) based on aligning the merged field (506) in the revised review (504) for displaying on the device (102).

6. A system of operation of a navigation system (100) comprising:
an input module (802) for receiving an entry (604) for a point of interest (206);
a review locator module (804), coupled to the input module (802), for locating a review (204) on an original webpage (202) for the point of interest (206);
a format recognizer module (806), coupled to the review locator module (804), for recognizing a display format (302) of the original webpage (202);
a key generator module (810) including a key extractor module (812), coupled to the format recognizer module (806) for generating an identical segmentation (304) based on distinguishing the display format (302) for identifying the identical segmentation (304) shared by a number of fields (210), wherein the identical segmentation (304) is defined as a part of a canonical XPath or partial canonical XPath shared by the number of fields (210), wherein generating the identical segmentation (304) comprises:
determining a window based on a difference between the least number of segments of the number of fields (210) and an offset for defining a number of considered segments for generating the identical segmentation (304);
extracting a map of candidates for the identical segmentation (304) based on the window for each of the fields (210);
merging the fields (210) of the number of fields (210) sharing a candidate; and iteratively increasing the value of the window until the map for the window comprises more than one candidate or the window is equal to the least number of segments to determine the identical segmentation (304) for each of the fields (210);
a review generator module (814), coupled to the key generator module (810), for selecting the field based on identifying the identical segmentation (304) shared by the number of fields (210) for grouping the fields (210); and
a webpage generator module (820), coupled to the review generator module (814), for generating a revised webpage (502) based on aligning the fields (210) for displaying on a device (102).

7. The system as claimed in claim 6 wherein:
the review generator module (814) includes:
a grouper module for grouping the fields (210) sharing the identical segmentation (304),
a revision output module (826) for generating a revised review (504) based on aligning the fields (210) sharing the identical segmentation (304), and
the webpage generator module (820) is for generating the revised webpage (502) based on compiling the revised review (504) for displaying on the device (102).

8. The system as claimed in claim 6 wherein the webpage generator module (820) includes an aligner module (822) for aligning the fields (210) based on the identical segmentation (304) shared for displaying on the device (102).

9. The system as claimed in claim 6 wherein the key generator module (810) includes a key extractor module (812), coupled to the format recognizer module (806), for extracting the identical segmentation (304) based on distinguishing the display format (302) for identifying the fields (210) sharing the identical segmentation (304).

10. The system as claimed in claim 6 wherein the key generator module (810) includes a key extractor module (812), coupled to the format recognizer module (806), for generating a merged field (506) sharing the identical segmentation (304) for generating a revised review (504).

## Patentansprüche

1. Verfahren zum Betreiben eines Navigationssystems (100), wobei das Verfahren umfasst:
Erhalten eines Eintrags (604) für ein Sonderziel (206);
Aufsuchen eines Reviews (204) auf einer Ursprungswebseite (202) für das Sonderziel (206);
Erkennen eines Anzeigeformates (302) der Ursprungswebseite (202);
Erzeugen einer identischen Segmentierung (304) basierend auf einem Charakterisieren des Anzeigeformats (302), um die identische Segmentierung (304) zu erkennen, welche von einer Anzahl von Feldern (210) geteilt wird, wobei die identische Segmentierung (304) als Teil eines kanonischen XPaths oder eines teilweise kanonischen XPaths definiert ist, welcher von der Anzahl von Feldern geteilt wird;
Auswählen der Felder (210) basierend auf einem Erkennen der identischen Segmentierung (304), welche von der Anzahl von Feldern (210) geteilt wird, um die Felder (210) zu gruppieren; und
Erzeugen einer überarbeiteten Webseite (502) beruhend auf einem Ausrichten der Felder (210) zur Darstellung auf einer Vorrichtung (102);
wobei das Erzeugen der identischen Segmentierung (304) umfasst:
Bestimmen eines Fensters beruhend auf einer Differenz zwischen der kleinsten Zahl von Segmenten aus der Anzahl von Feldern (210) und einem Versatz, um eine Anzahl von berücksichtigten Segmenten festzulegen, um die identische Segmentierung (304) zu erzeugen;
Extrahieren einer Abbildung von Kandidaten für die identische Segmentierung (304) beruhend auf dem Fenster für jedes der Felder (210);
Zusammenführen der Felder (210) aus der Anzahl von Feldern (210), welche einen Kandidaten teilen; und
Erhöhen des Wertes des Fensters auf iterative Weise, bis die Abbildung für das Fenster mehr als einen Kandidaten umfasst oder bis das Fenster der kleinsten Zahl von Segmenten entspricht, um die identische Segmentierung (304) für jedes der Felder (210) zu bestimmen.

2. Verfahren nach Anspruch 1, welches ferner umfasst:
Gruppieren der Felder (210), welche die identische Segmentierung (304) teilen;
Erzeugen eines überarbeiteten Reviews (504) beruhend auf einem Ausrichten der Felder (210), welche die identische Segmentierung (304) teilen; und
wobei:
das Erzeugen der überarbeiteten Webseite (502) ein Erzeugen der überarbeiteten Webseite (502) beruhend auf einem Zusammenstellen des überarbeiteten Reviews (504) zur Darstellung auf der Vorrichtung (102) umfasst.

3. Verfahren nach Anspruch 1, wobei das Erzeugen der überarbeiteten Webseite (502) ein Ausrichten der Felder (210) beruhend auf einem Gruppieren der zur Darstellung auf der Vorrichtung (102) geteilten identischen Segmentierung (304) umfasst.

4. Verfahren nach Anspruch 1, wobei das Erzeugen der identischen Segmentierung (304) ein Extrahieren der identischen Segmentierung (304) basierend auf einem Charakterisieren des Anzeigeformates (302) zum Ermitteln des Feldes umfasst, welches die identische Segmentierung (304) teilt.

5. Verfahren nach Anspruch 1, welches ferner umfasst:
Erzeugen eines zusammengeführten Feldes (506), welches die identische Segmentierung (304) teilt, um ein überarbeitetes Review (504) zu erzeugen; und
wobei:
das Erzeugen der überarbeiteten Webseite (502) ein Erzeugen der überarbeiteten Webseite (502) beruhend auf einem Ausrichten des zusammengeführten Feldes (506) in dem überarbeiteten Review (504) zur Darstellung auf dem Gerät (102) umfasst.

6. System zum Betreiben eines Navigationssystem (100), wobei das System umfasst:
ein Eingangsmodul (802) zum Erhalten eines Eintrags (604) für ein Sonderziel (206);
ein Reviewaufsuchmodul (804), welches mit dem Eingangsmodul (802) gekoppelt ist, zum Aufsuchen eines Reviews (204) auf einer Ursprungswebseite (202) für das Sonderziel (206);
ein Formaterkennungsmodul (806), welches mit dem Reviewaufsuchmodul (804) gekoppelt ist, zum Erkennen eines Anzeigeformates (302) der Ursprungswebseite (202);
ein Schlüsselerzeugungsmodul (810), welches ein Schlüsselextraktionsmodul (812) umfasst und welches mit dem Formaterkennungsmodul (806) gekoppelt ist, zum Erzeugen einer identischen Segmentierung (304) beruhend auf einem Charakterisieren des Anzeigeformats (302), um die identische Segmentierung (304) zu erkennen, welche von einer Anzahl von Feldern (210) geteilt wird, wobei die identische Segmentierung (304) als Teil eines kanonischen XPaths oder eines teilweise kanonischen XPaths definiert ist, welcher von der Anzahl von Feldern (210) geteilt wird, wobei das Erzeugen der identischen Segmentierung (304) umfasst:
Bestimmen eines Fensters beruhend auf einer Differenz zwischen der kleinsten Zahl von Segmenten aus der Anzahl von Feldern (210) und einem Versatz, um eine Anzahl von berücksichtigten Segmenten festzulegen, um die identische Segmentierung (304) zu erzeugen;
Extrahieren einer Abbildung von Kandidaten für die identische Segmentierung (304) beruhend auf dem Fenster für jedes der Felder (210);
Zusammenführen der Felder (210) aus der Anzahl von Feldern (210), welche einen Kandidaten teilen; und
Erhöhen des Wertes des Fensters auf iterative Weise, bis die Abbildung für das Fenster mehr als einen Kandidaten umfasst oder bis das Fenster der kleinsten Zahl von Segmenten entspricht, um die identische Segmentierung (304) für jedes der Felder (210) zu bestimmen;
ein Reviewerzeugungsmodul (814), welches mit dem Schlüsselerzeugungsmodul (810) gekoppelt ist, zum Auswählen des Feldes beruhend auf einem Erkennen der identischen Segmentierung (304), welche von der Anzahl von Feldern (210) geteilt wird, um die Felder (210) zu gruppieren; und
ein Webseitenerzeugungsmodul (820), welches mit dem Reviewerzeugungsmodul (814) gekoppelt ist, zum Erzeugen einer überarbeiteten Webseite (502) beruhend auf einem Ausrichten der Felder (210) zur Darstellung auf einem Gerät (102).

7. System nach Anspruch 6, wobei:
das Reviewerzeugungsmodul (814) umfasst:
- ein Gruppierungsmodul zum Gruppieren der Felder (210), welche die identische Segmentierung (304) teilen,
- ein Überarbeitungsausgabemodul (826) zum Erzeugen eines überarbeiteten Reviews (504) beruhend auf einem Ausrichten der Felder (210), welche die identische Segmentierung (304) teilen; und
das Webseitenerzeugungsmodul (820) zum Erzeugen der überarbeiteten Webseite (502) beruhend auf einem Zusammenstellen des überarbeiteten Reviews (504) zur Darstellung auf der Vorrichtung (102) eingerichtet ist.

8. System nach Anspruch 6, wobei das Webseitenerzeugungsmodul (820) ein Ausrichtungsmodul (822) zum Ausrichten der Felder (210) beruhend auf der zur Darstellung auf dem Gerät (102) geteilten identischen Segmentierung (304) umfasst.

9. System nach Anspruch 6, wobei das Schlüsselerzeugungsmodul (810) ein Schlüsselextraktionsmodul (812) umfasst, welches mit dem Formaterkennungsmodul (806) gekoppelt ist, zum Extrahieren der identischen Segmentierung (304) basierend auf einem Charakterisieren des Anzeigeformates (302) zum Ermitteln der Felder (210), welche die identische Segmentierung (304) teilen.

10. System nach Anspruch 6, wobei das Schlüsselerzeugungsmodul (810) ein Schlüsselextraktionsmodul (812) umfasst, welches mit dem Formaterkennungsmodul (806) gekoppelt ist, zum Erzeugen eines zusammengeführten Feldes (506), welches die identische Segmentierung (304) teilt, um ein überarbeitetes Review (504) zu erzeugen.

## Revendications

1. Procédé d'exploitation d'un système de navigation (100) comprenant les étapes ci-dessous consistant à :
recevoir une entrée (604) pour un point d'intérêt (206) ;
localiser une évaluation (204) sur une page web d'origine (202) pour le point d'intérêt (206) ;
reconnaître un format d'affichage (302) de la page web d'origine (202) ;
générer une segmentation identique (304) sur la base de la distinction du format d'affichage (302) pour identifier la segmentation identique (304) partagée par un nombre de champs (210), dans lequel la segmentation identique (304) est définie dans le cadre d'un langage d'interrogation XPath canonique ou d'un langage d'interrogation XPath canonique partiel partagé par le nombre de champs ;
sélectionner les champs (210) sur la base de l'identification de la segmentation identique (304) partagée par le nombre de champs (210) en vue de regrouper les champs (210) ; et
générer une page web révisée (502) sur la base d'un alignement des champs (210) en vue d'un affichage sur un dispositif (102) ;
dans lequel l'étape de génération de la segmentation identique (304) comprend les étapes ci-dessous consistant à :
déterminer une fenêtre sur la base d'une différence entre le plus petit nombre de segments du nombre de champs (210) et un décalage pour définir un nombre de segments considérés en vue de générer la segmentation identique (304) ;
extraire une carte de candidats pour la segmentation identique (304) sur la base de la fenêtre pour chacun des champs (210) ;
fusionner les champs (210) du nombre de champs (210) partageant un candidat ; et augmenter de façon itérative la valeur de la fenêtre jusqu'à ce que la carte pour la fenêtre comprenne plus d'un candidat, ou que la fenêtre soit égale au plus petit nombre de segments, en vue de déterminer la segmentation identique (304) pour chacun des champs (210).

2. Procédé selon la revendication 1, comprenant en outre les étapes ci-dessous consistant à :
regrouper les champs (210) partageant la segmentation identique (304) ;
générer une évaluation révisée (504) sur la base de l'alignement des champs (210) partageant la segmentation identique (304) ; et
dans lequel :
l'étape de génération de la page web révisée (502) consiste à générer la page web révisée (502) sur la base d'une compilation de l'évaluation révisée (504) en vue d'un affichage sur le dispositif (102).

3. Procédé selon la revendication 1, dans lequel l'étape de génération de la page web révisée (502) inclut l'étape consistant à aligner les champs (210) sur la base du regroupement de la segmentation identique (304) partagée en vue d'un affichage sur le dispositif (102).

4. Procédé selon la revendication 1, dans lequel l'étape de génération de la segmentation identique (304) inclut l'étape consistant à extraire la segmentation identique (304) sur la base de la distinction du format d'affichage (302) pour identifier le champ partageant la segmentation identique (304).

5. Procédé selon la revendication 1, comprenant en outre les étapes ci-dessous consistant à :
générer un champ fusionné (506) partageant la segmentation identique (304) en vue de générer un évaluation révisée (504) ; et
dans lequel :
l'étape de génération de la page web révisée (502) consiste à générer la page web révisée (502) sur la base de l'alignement du champ fusionné (506) dans l'évaluation révisée (504) en vue d'un affichage sur le dispositif (102).

6. Système d'exploitation d'un système de navigation (100) comprenant :
un module d'entrée (802) destiné à recevoir une entrée (604) pour un point d'intérêt (206) ;
un module de localisation d'évaluation (804), couplé au module d'entrée (802), destiné à localiser une évaluation (204) sur une page web d'origine (202) pour le point d'intérêt (206) ;
un module de reconnaissance de format (806), couplé au module de localisation d'évaluation (804), destiné à reconnaître un format d'affichage (302) de la page web d'origine (202) ;
un module de génération de clé (810) incluant un module d'extraction de clé (812), couplé au module de reconnaissance de format (806), destiné à générer une segmentation identique (304) sur la base de la distinction du format d'affichage (302) pour identifier la segmentation identique (304) partagée par plusieurs champs (210), dans lequel la segmentation identique (304) est définie dans le cadre d'un langage d'interrogation XPath canonique ou d'un langage d'interrogation XPath canonique partiel partagé par plusieurs champs (210), dans lequel l'étape de génération de la segmentation identique (304) comprend les étapes ci-dessous consistant à :
déterminer une fenêtre sur la base d'une différence entre le plus petit nombre de segments du nombre de champs (210) et un décalage afin de définir un nombre de segments considérés en vue de générer la segmentation identique (304) ;
extraire une carte de candidats pour la segmentation identique (304) sur la base de la fenêtre pour chacun des champs (210) ;
fusionner les champs (210) du nombre de champs (210) partageant un candidat ; et augmenter de façon itérative la valeur de la fenêtre jusqu'à ce que la carte pour la fenêtre comprenne plus d'un candidat, ou jusqu'à ce que la fenêtre soit égale au plus petit nombre de segments, en vue de déterminer la segmentation identique (304) pour chacun des champs (210) ;
un module de génération d'évaluation (814), couplé au module de génération de clé (810), destiné à sélectionner le champ sur la base de l'identification de la segmentation identique (304) partagée par le nombre de champs (210), en vue de regrouper les champs (210) ; et
un module de génération de page web (820), couplé au module de génération d'évaluation (814), destiné à générer une page web révisée (502) sur la base de l'alignement des champs (210) en vue d'un affichage sur un dispositif (102).

7. Système selon la revendication 6, dans lequel :
le module de génération d'évaluation (814) inclut :
un module de regroupement destiné à regrouper les champs (210) partageant la segmentation identique (304) ;
un module de sortie de révision (826) destiné à générer une évaluation révisée (504) sur la base de l'alignement des champs (210) partageant la segmentation identique (304) ; et
dans lequel le module de génération de page web (820) est destiné à générer la page web révisée (502) sur la base de la compilation de l'évaluation révisée (504) en vue d'un affichage sur le dispositif (102).

8. Système selon la revendication 6, dans lequel le module de génération de page web (820) inclut un module d'alignement (822) destiné à aligner les champs (210), sur la base de la segmentation identique (304) partagée, en vue d'un affichage sur le dispositif (102).

9. Système selon la revendication 6, dans lequel le module de génération de clé (810) inclut un module d'extraction de clé (812), couplé au module de reconnaissance de format (806), destiné à extraire la segmentation identique (304) sur la base de la distinction du format d'affichage (302) en vue d'identifier les champs (210) partageant la segmentation identique (304).

10. Système selon la revendication 6, dans lequel le module de génération de clé (810) inclut un module d'extraction de clé (812), couplé au module de reconnaissance de format (806), destiné à générer un champ fusionné (506) partageant la segmentation identique (304) en vue de générer une évaluation révisée (504).
